# FASCICULE DE BREVET EUROPEEN

(11) **EP 3 375 169 B1**
(45) Date de publication et mention de la délivrance du brevet: **21.08.2019**
(21) Numéro de dépôt: 16809966.1
(22) Date de dépôt: 07.11.2016
(51) Int. Cl.: H04L 29/08, H04W 28/02

(54) **PROCÉDÉ DE GESTION DU TRAFIC RÉSEAU RELATIF À UN MÉCANISME DE SIGNALISATION DE PRÉSENCE D'UN TERMINAL**
VERFAHREN ZUR VERWALTUNG EINES NETZWERKVERKEHRS IN ZUSAMMENHANG MIT EINEM MECHANISMUS ZUR SIGNALISIERUNG DES VORHANDENSEINS EINES ENDGERÄTS
METHOD FOR MANAGING NETWORK TRAFFIC RELATED TO A MECHANISM FOR SIGNALLING THE PRESENCE OF A TERMINAL

(30) Priorité: 10.11.2015 FR 1560770
(43) Date de publication de la demande: 19.09.2018
(73) Titulaire: Orange, 75015 Paris (FR)
(72) Inventeur: MOUAFIK, Ali-Amine, 92326 Châtillon cedex (FR); MOUQUET, Antoine, 92400 Courbevoie (FR); EL MOUMOUHI, Sanaa, 75018 Paris (FR)
(86) Numéro de dépôt international: PCT/FR2016/052879
(87) Numéro de publication internationale: WO 2017/081393

(56) Documents cités:
- US-A1- 2015 049 648
- CHINA UNICOM ET AL: "Extension of Presence Reporting Area", 3GPP DRAFT; S2-150289 EXTENSION OF PRESENCE REPORTING AREA MECHANISM 23.203-CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG2, no. Sorrento, Italy; 20150126 - 20150130 25 janvier 2015 (2015-01-25), XP050942261, Extrait de l'Internet: URL:http://www.3gpp.org/ftp/Meetings_3GPP_ SYNC/SA2/Docs/ [extrait le 2015-01-25]

## Description

L'invention se situe dans le domaine général des télécommunications. Elle concerne plus particulièrement un procédé de gestion du trafic réseau relatif à un mécanisme de signalisation de présence d'un terminal dans un réseau de communication.

Le document de spécification « TS 23.203 » du groupe de normalisation 3GPP (pour « 3rd Generation Partnership Project »), version 13.2.0, définit une architecture dite « architecture PCC » (pour « Policy and Charging Control » en anglais) visant à permettre un contrôle dynamique des ressources réseaux en fonction d'informations collectées par une entité de contrôle dite « entité PCRF » (pour « Policy Control and Charging Rules Function » en anglais). Ces informations sont par exemples des informations associées au réseau (e.g. type d'accès radio, adresses de passerelles, localisation client), associées à un abonné (e.g. informations de souscription), ou encore associées à une application (e.g. type d'application, type de média). L'entité PCRF adapte et contrôle ainsi l'usage des ressources réseaux en fonction notamment de services requis par l'abonné et de son profil d'abonné. Pour cela l'entité PCRF fournit à une entité d'application de règles de contrôle, dite « entité PCEF », des règles de contrôle d'une session de communication entre un terminal et un réseau de communication par paquets de données. Ces règles de contrôle sont communément appelées « règles PCC ».

Le document de demande de modification "Extension of Presence Reporting Area", qui fait référence à la spécification standard TS 23.203, propose de réduire la signalisation sur le plan de commande tout en communiquant à la PCRF l'emplacement approximatif de l'UE. La demande de modification propose également l'extension du mécanisme de zone de signalisation de présence, PRA, afin de permettre la possibilité de configurer plusieurs identifiants de PRA dans la même session PDN.

Le document de spécification « TS 23.401 » du groupe de normalisation 3GPP, version 13.1.0, définit par ailleurs une procédure de signalisation de présence dans une zone de signalisation de présence (ou zone PRA pour « Presence Reporting Area » en anglais). Cette procédure vise à réduire le trafic réseau dû à un changement de localisation d'un terminal abonné en évitant une notification systématique de ce changement vers différentes entités du réseau. Selon cette procédure, un changement de localisation est notifié uniquement lorsque le terminal entre ou sort d'une zone de signalisation de présence prédéfinie constituée d'une ou plusieurs zones géographiques. Cette procédure est susceptible d'être gérée par l'entité de contrôle PCRF ou par une entité de gestion de crédits abonné, dite entité OCS (pour « Online Charging System »).

Lorsque cette procédure est gérée par l'entité de contrôle PCRF, cette dernière détermine, à l'aide des informations de souscription de l'abonné, si la session de communication à établir nécessite l'activation de la signalisation de présence. Si tel est le cas, l'entité de contrôle PCRF envoie à l'entité d'application de règles PCEF un identifiant de zone de signalisation de présence associé à l'abonné, lors de l'envoi des règles de contrôle à cette même entité. L'identifiant indique ainsi à l'entité d'application de règles PCEF que la signalisation de présence doit être activée, ou autrement dit que l'entité de contrôle PCRF souhaite être notifiée lorsque le terminal entre dans, ou sort de la zone de signalisation de présence associée à l'abonné.

Le mécanisme de signalisation de présence ne permet dans sa définition initiale d'associer qu'une seule zone de signalisation de présence par profil d'abonné. Dans le document « Study on improvement of awareness of user location change », SP-150517, l'organisme de normalisation 3GPP propose d'étendre ce mécanisme à plusieurs zones de signalisation de présence par profil d'abonné. Cette multiplication des zones de signalisation de présence associées à un abonné présente cependant des inconvénients. Un trafic de signalisation supplémentaire et une consommation de ressources plus importante au niveau notamment de l'entité en charge de la gestion des procédures de mobilité au sein du réseau (e.g. entité MME pour « Mobility Management Entity ») sont engendrés. Une telle entité met en effet à jour la localisation d'un terminal et la session de communication associée à ce terminal à chaque fois que ce dernier entre dans, ou sort d'une des zones de signalisation de présence qui lui sont associées. Une telle augmentation du trafic est en particulier susceptible de provoquer une surcharge du réseau, ou d'aggraver une surcharge du réseau déjà existante.

Un des buts de l'invention est de remédier à des insuffisances/inconvénients de l'état de la technique et/ou d'y apporter des améliorations.

Selon un premier aspect l'invention concerne un procédé de gestion, dans un réseau de communication, du trafic réseau relatif à un mécanisme de signalisation de présence d'un terminal dans une pluralité de zones de signalisation de présence, comprenant les étapes suivantes mises en oeuvre par une entité de gestion de mobilité :
- réception, pour chaque zone de signalisation de présence de la pluralité, d'un identifiant de zone et d'un niveau de priorité pour la zone ;
- mémorisation dans un contexte d'abonné relatif à un abonné dudit terminal, des identifiants et niveaux de priorité reçus en association avec un identifiant du terminal ;
et lorsque la charge de l'entité de gestion de mobilité est supérieure à un seuil prédéfini de charge critique :
- suspension du mécanisme de signalisation de présence pour les zones, dites zones non surveillées, de signalisation de présence de la pluralité dont le niveau de priorité est inférieur à un niveau de priorité de transition.

Le procédé de gestion permet ainsi d'alléger le trafic réseau en affectant un niveau de priorité à chaque zone de signalisation de présence. Plus précisément, en cas de surcharge présente ou à venir du réseau et notamment de l'entité de gestion de mobilité (e.g. entité MME), le mécanisme de signalisation de présence mis en oeuvre est suspendu pour les zones pour lesquelles la signalisation de présence est la moins prioritaire. L'entité de gestion de mobilité se trouve ainsi déchargée d'une partie des messages de signalisation relatifs au mécanisme de signalisation de présence. L'entité de gestion de mobilité n'a en effet plus la nécessité de mettre à jour la localisation du terminal et la session de communication associée à ce terminal à chaque fois que ce dernier entre dans, ou sort d'une des zones de signalisation pour laquelle le mécanisme de signalisation est suspendu. L'entité de gestion de mobilité peut ainsi retrouver une charge (e.g. charge processeur) non critique pour le réseau.

Les messages de signalisation relatifs au mécanisme de signalisation de présence émis par l'entité de gestion de mobilité étant en outre relayés auprès d'entités telles qu'une entité de contrôle (e.g. entité PCRF) ou telles qu'une entité de gestion de crédits abonné (e.g. entité OCS), il résulte de la suspension du mécanisme de signalisation un allègement du trafic réseau tant au niveau de l'entité de gestion de mobilité elle-même qu'au niveau des équipements du réseau amenés à relayer les informations de signalisation de présence.

Avec un seuil de charge critique adéquat, le procédé permet avantageusement de prévenir une surcharge de l'entité de gestion de mobilité, et plus généralement du réseau dans son ensemble, avant qu'elle ne se produise.

En outre, la priorisation des zones de signalisation de présence pour un abonné permet de différencier la qualité de service offerte dans ces zones pour un même service en fonction des profils d'abonnés au réseau. Le procédé permet par exemple de maintenir prioritairement une session relative à un profil d'abonné auquel est associée une haute qualité de service dès lors que les niveaux de priorité associés aux zones de signalisation de présence pour cet abonné sont les plus élevés.

Selon une caractéristique particulière, l'étape de suspension est réitérée jusqu'à ce que la charge de l'entité de gestion de mobilité soit inférieure au seuil de charge critique, le niveau de priorité de transition étant incrémenté à chaque nouvelle itération au niveau de priorité qui lui est immédiatement supérieur.

Les itérations successives de l'étape de suspension du mécanisme de signalisation de présence sont particulièrement avantageuses dans le cas où une suspension du mécanisme pour des zones correspondant à un premier niveau de priorité ne permet pas de faire retomber la charge de l'entité de gestion de mobilité en dessous du seuil de charge critique. Le niveau de priorité de transition étant incrémenté à chaque itération, le procédé permet en effet d'étendre le nombre de zones de signalisation de présence concernées par la suspension du mécanisme de signalisation de présence. Le trafic du réseau résultant du mécanisme de signalisation de présence s'en trouve d'autant diminué.

Les itérations successives de l'étape de suspension du mécanisme de signalisation de présence permettent en outre d'alléger progressivement la charge de l'entité de gestion de mobilité. Le procédé permet notamment de procéder par paliers successifs en ne suspendant le mécanisme de signalisation de présence que pour un nombre minimal de zones de signalisation de présence. La qualité de service peut en conséquence avantageusement être maintenue pour un nombre plus important d'abonnés.

Selon une caractéristique particulière, le procédé comprend en outre, lorsque le mécanisme de signalisation de présence est suspendu pour toutes les zones de signalisation de présence associées au terminal, un envoi à destination de la station de base à laquelle le terminal est attaché, d'une commande de résiliation de souscription de la station de base au mécanisme de signalisation de présence pour le terminal.

Lorsque le mécanisme de signalisation est suspendu pour l'ensemble des zones de signalisation de présence associées à un terminal, aucun des messages reçus par l'entité de gestion de mobilité relatifs à la signalisation de présence pour ce terminal n'est traité par cette dernière. Les messages de signalisation de présence émis depuis la station de base (e.g. eNode B pour « evolved Node B » dans un réseau LTE pour « Long Term Evolution ») à destination de l'entité de gestion de mobilité génèrent alors une charge réseau inutile. La commande de résiliation de souscription de la station de base au mécanisme de signalisation permet de supprimer cette charge réseau. La station de base étant la première entité du réseau en mesure de détecter une entrée ou une sortie d'un terminal dans une cellule, une telle commande permet en outre d'intervenir directement à la source des émissions de messages de signalisation de présence. En supprimant ces premiers messages, le trafic généré par leur relais vers d'autres entités du réseau est également supprimé. Le procédé permet ainsi d'accélérer le retour à un état de charge non critique tant pour l'entité de gestion de mobilité, que pour les entités du réseau dans leur ensemble.

Selon une caractéristique particulière, un indicateur de notification est associé à chaque niveau de priorité, cet indicateur indiquant si l'envoi d'une notification auprès d'une entité de contrôle est souhaité pour le niveau de priorité en cas de suspension du mécanisme de signalisation. Le procédé comprend alors un envoi à l'entité de contrôle d'une notification de suspension du mécanisme de signalisation de présence pour les zones non surveillées ayant un niveau de priorité pour lequel l'indicateur indique que l'envoi est souhaité.

Les notifications envoyées à l'entité de contrôle permettent d'informer cette dernière qu'une ou plusieurs zone(s) de signalisation de présence associée(s) à un terminal n'est ou ne sont plus suivie(s). L'entité de contrôle peut alors prendre des mesures en conséquence en fonction par exemple d'un profil d'abonné associé au terminal. Il est souligné que ces notifications ne sont mises en oeuvre que pour certains niveaux de priorité, et qu'elles ne sont donc pas envoyées pour toutes les zones de signalisation de présence pour lesquelles le mécanisme de signalisation a été suspendu. En procédant ainsi le procédé permet de restreindre le trafic supplémentaire généré par l'envoi de ces notifications aux niveaux de priorité les plus élevés.

Selon une caractéristique particulière, l'indicateur de notification et les niveaux de priorité sont fournis à l'entité de gestion de mobilité par l'entité de contrôle.

Selon une caractéristique particulière, le contexte d'abonné comprend pour chaque identifiant de zone de signalisation de présence de la pluralité mémorisé un statut actif ou suspendu indiquant si le mécanisme de signalisation de présence est actif ou suspendu pour la zone de signalisation de présence. Le procédé comprend en outre une étape de mise à jour des statuts en cas de modification des zones de signalisation de présence associées au terminal, les statuts associés aux nouvelles zones de signalisation de présence étant actifs pour les nouvelles zones de signalisation de présence dont le niveau de priorité est supérieur au niveau de priorité de transition, et inactifs pour les nouvelles zones de signalisation de présence dont le niveau de priorité est inférieur au niveau de priorité de transition.

La mise à jour des statuts associés aux zones de signalisation de présence permet d'activer et suspendre dynamiquement le mécanisme de signalisation de présence par l'entité de contrôle. Un changement de profil d'abonné, par exemple un changement du niveau de priorité de certaines zones de signalisation de présence associées à un abonné ou encore de la liste des zones associées à un abonné, peut directement être répercuté par l'entité de contrôle auprès de l'entité de gestion de mobilité et être immédiatement pris en compte par cette dernière.

Selon un deuxième aspect l'invention concerne une entité de gestion de mobilité, dans un réseau de communication, apte à mettre en oeuvre un mécanisme de signalisation de présence d'un terminal dans une pluralité de zones de signalisation de présence, comprenant :
- un module de réception agencé pour recevoir, depuis une entité de contrôle, pour chaque zone de signalisation de présence de la pluralité, un identifiant de zone et un niveau de priorité pour la zone ;
- un module de mémorisation agencé pour mémoriser dans un contexte d'abonné relatif à un abonné du terminal, les identifiants et niveaux de priorité reçus en association avec un identifiant du terminal ;
- un module de vérification agencé pour vérifier que la charge de l'entité de gestion de mobilité est supérieure à un seuil prédéfini de charge critique ;
- un module de suspension, activé lorsque la charge de l'entité de gestion de mobilité est vérifiée supérieure à un seuil prédéfini de charge critique, et agencé pour suspendre le mécanisme de signalisation de présence pour les zones, dites zones non surveillées, de signalisation de présence de la pluralité dont le niveau de priorité est inférieur à un niveau de priorité de transition.

Les avantages énoncés pour l'une quelconque des caractéristiques du procédé de gestion selon le premier aspect sont directement transposables à l'entité de gestion de mobilité selon le deuxième aspect.

Selon un troisième aspect l'invention concerne une entité de contrôle, dans un réseau de communication, apte à déterminer qu'une signalisation de présence d'un terminal dans une pluralité de zones de signalisation de présence est requise pour un profil d'abonné du réseau, l'entité de contrôle comprenant un module d'envoi agencé pour envoyer à une entité de gestion de mobilité, pour chaque zone de signalisation de présence de la pluralité, un identifiant de zone et un niveau de priorité pour la zone.

Selon un quatrième aspect l'invention concerne un système de gestion du trafic réseau relatif à un mécanisme de signalisation de présence d'un terminal dans une pluralité de zones de signalisation de présence d'un réseau de communication, comprenant :
- au moins une entité de gestion de mobilité ; et
- au moins une entité de contrôle.

Les avantages énoncés pour l'une quelconque des caractéristiques du procédé de gestion selon le premier aspect sont directement transposables au système de gestion selon le quatrième aspect.

Selon un cinquième aspect, l'invention concerne également un programme pour une entité de gestion de mobilité, comprenant des instructions de code de programme destinées à commander l'exécution des étapes du procédé de gestion précédemment décrit, lorsque ledit programme est exécuté par ladite entité de gestion de mobilité et un support d'enregistrement lisible par une entité de gestion de mobilité sur laquelle est enregistré un programme pour une entité de gestion de mobilité.

L'invention sera mieux comprise à l'aide de la description suivante de modes de réalisation particuliers, en référence aux dessins annexés sur lesquels :
- la figure 1 représente un système de gestion du trafic réseau relatif à un mécanisme de signalisation de présence d'un terminal selon un mode particulier de réalisation ;
- la figure 2a représente des étapes d'un procédé de gestion du trafic réseau relatif à un mécanisme de signalisation de présence d'un terminal selon un premier mode particulier de réalisation ;
- la figure 2b représente des étapes d'un procédé de gestion du trafic réseau relatif à un mécanisme de signalisation de présence d'un terminal selon un deuxième mode particulier de réalisation ;
- la figure 3 représente une entité de gestion de mobilité selon un mode particulier de réalisation ;
- les figures 4a, 4b, 4c et 4d représente le contenu d'un contexte d'abonné d'un terminal à différents instants d'un procédé de gestion du trafic réseau relatif à un mécanisme de signalisation de présence selon un mode particulier de réalisation ;
- la figure 5 représente une table de correspondance entre des niveaux de priorité et le besoin de notifier une entité de contrôle utilisée par une entité de gestion de mobilité dans un mode particulier de réalisation.

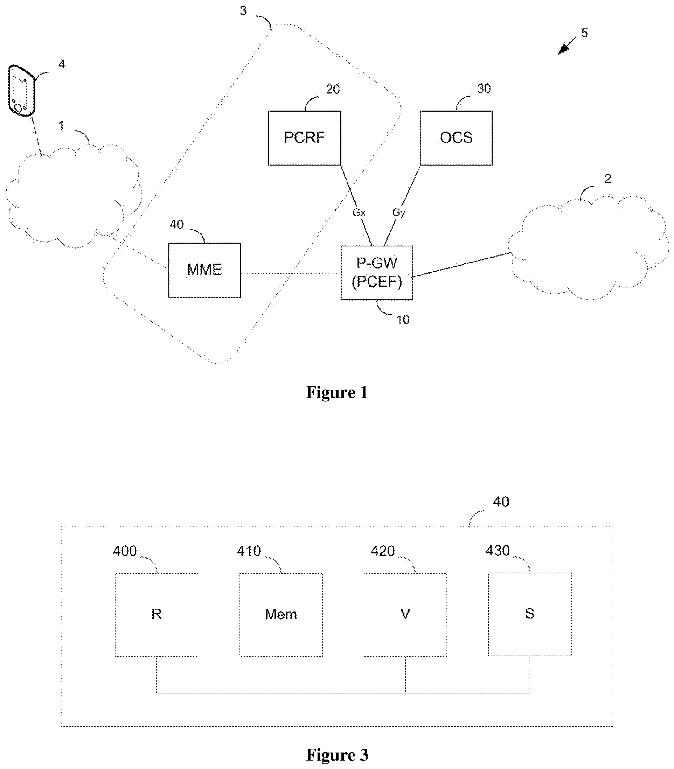

La **figure 1** représente un système 3 de gestion du trafic réseau relatif à un mécanisme de signalisation de présence d'un terminal 4 dans une pluralité de zones de signalisation de présence d'un réseau de communication 5. Ce réseau de communication 5 est à titre d'exemple un réseau EPS (pour « Evolved Packet System » en anglais). Le terminal 4 accède au réseau de communication 5 par l'intermédiaire d'un réseau d'accès mobile 1.

Le système 3 permet plus particulièrement de signaler un changement de localisation, par rapport à une zone de signalisation de présence, du terminal 4 pour lequel une session de communication est établie avec un réseau de communication par paquets 2. Le changement de localisation correspond à une entrée ou à une sortie du terminal 4 par rapport à une zone de signalisation de présence d'une pluralité de zones de signalisation de présence associée au terminal 4. Une telle zone de signalisation est typiquement une zone géographique définie par une ou plusieurs cellules du réseau d'accès mobile 1.

Le système 3 est intègré à une architecture PCC et comprend une entité de contrôle 20 et une entité de gestion de mobilité 40. L'entité de contrôle 20 est par exemple une entité PCRF, et l'entité de gestion de mobilité une entité MME telles que décrites dans le document de spécification « TS 23.203 ».

Telle que décrite précédemment, l'entité de contrôle 20 collecte des informations associées au réseau, à un abonné, ou encore associées à une application. L'entité de contrôle 20 adapte et contrôle l'usage des ressources réseaux en fonction de services requis par l'abonné et de son profil d'abonné, et envoie pour cela des règles de contrôle PCC à une entité d'application de règles 10. Cette dernière entité est par exemple une entité PCEF telle que décrite dans le document de spécification « TS 23.203 ». Dans le mode de réalisation décrit, cette entité PCEF est un module d'une passerelle d'interconnexion P-GW (pour « Packet Data Network - Gateway » en anglais).

Lors d'une ouverture de session de communication entre le terminal 4 et le réseau de communication par paquets 2, l'entité d'application de règles de contrôle 10 ouvre une session de contrôle avec l'entité de contrôle 20 afin d'obtenir les règles de contrôle à appliquer à la session de communication. L'entité d'application de règles 10 transmet à l'entité de contrôle 20 les caractéristiques demandées pour la session de communication. En fonction de ces caractéristiques et des informations qu'elle a collectées telles que mentionnées précédemment, l'entité de contrôle 20 détermine les règles de contrôle (qualité de service, tarification, etc.) à appliquer pour les différents services transportés par la session de communication, et les envoie à l'entité d'application de règles 10. En particulier, si l'entité de contrôle 20 détermine que le terminal 4 est par exemple associé à une offre de services associée à une localisation du terminal 4 dans une ou plusieurs zones géographiques particulières, elle envoie à l'entité d'application de règles 10 une demande de souscription à un mécanisme de signalisation de présence du terminal 4 dans les zones de signalisation de présence correspondant à ces zones géographiques. L'entité de contrôle 20 demande ainsi à être notifiée par l'entité d'application de règles 10 des changements de localisation du terminal 4 lorsque ce dernier entre ou sort d'une de ces zones de signalisation de présence. De même, lorsque l'entité d'application de règles 10 détermine en fonction des règles de contrôle obtenues de l'entité de contrôle 20, qu'il est nécessaire d'ouvrir une session avec une entité de gestion de crédits 30, cette dernière est également susceptible de souscrire au mécanisme de signalisation de présence, afin d'être notifiée par l'entité d'application de règles 10 des changements de localisation du terminal 4 lorsque ce dernier entre ou sort d'une zone de signalisation de présence associée au terminal 4.

La demande de souscription au mécanisme de signalisation de présence est ensuite transmise à destination de l'entité de gestion de mobilité 40. L'entité de gestion de mobilité 40 est en charge de la gestion des procédures de mobilité au sein du réseau de communication 5. Elle mémorise notamment la demande de souscription au mécanisme de signalisation de présence et l'associe à la session de communication dans un contexte d'abonné relatif à l'abonné du terminal 4. A chaque fois que le terminal 4 entre ou sort d'une des zones de signalisation de présence qui lui sont associées, l'entité de gestion de mobilité 40 met à jour la localisation du terminal 4 et met à jour la session de communication. L'entité d'application de règles 10 est ainsi informée de la nouvelle localisation du terminal 4 et informe à son tour les entités du réseau de communication 5 ayant souscrit au mécanisme de signalisation de présence du terminal 4. L'entité d'application de règles 10 est ainsi susceptible de relayer les informations de signalisation de présence du terminal 4 à l'entité de contrôle 20 ou encore à l'entité de gestion de crédits 30.

Les communications entre les différentes entités sont assurés par l'intermédiaire des interfaces définies par le groupe de normalisation 3GPP, notamment l'interface Gy entre l'entité d'application de règles 10 et l'entité de gestion de crédits 30, et l'interface Gx entre l'entité d'application de règles 10 et l'entité de contrôle 20.

Le système 3 a été décrit dans un réseau de communication EPC, il peut cependant aisément être adapté à d'autres architectures de réseau.

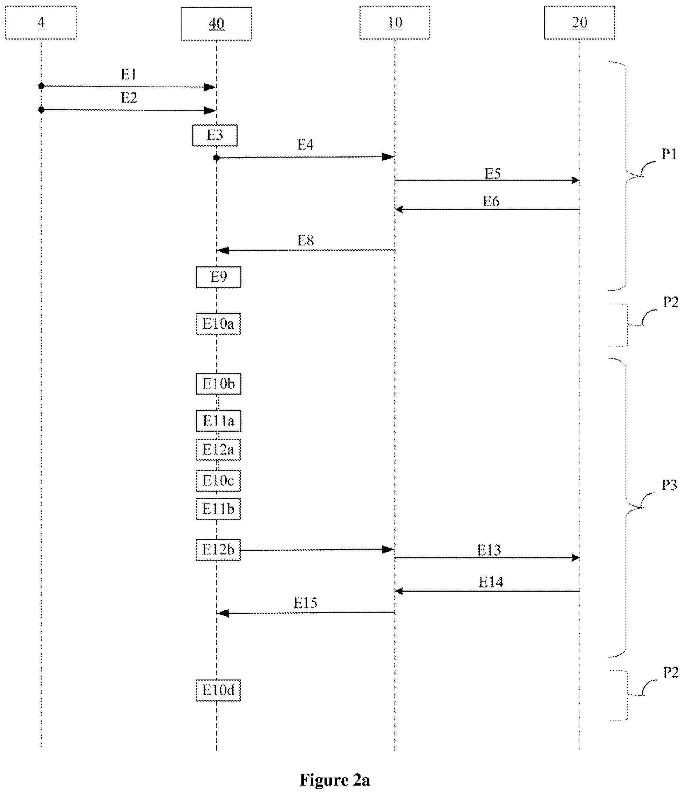

La **figure 2a** représente des étapes d'un procédé de gestion du trafic réseau relatif à un mécanisme de signalisation de présence d'un terminal 4 dans un réseau selon un premier mode particulier de réalisation.

Le procédé de gestion est mis en oeuvre par une entité de gestion de mobilité 40. L'entité de gestion de mobilité 40 est à titre d'exemple une entité MME telle que décrite précédemment.

Le procédé est plus particulièrement mis en oeuvre pendant différentes phases P1, P2 et P3. La phase P1 correspond à une phase de création d'une session de communication entre le terminal 4 et un réseau de communication par paquets (non représenté). Les phases P2 et P3 correspondent respectivement à des phases de charge normale et de surcharge de l'entité de gestion de mobilité 40. Les phases P2 et P3 se répètent selon un ordre aléatoire en fonction par exemple de l'état du trafic réseau.

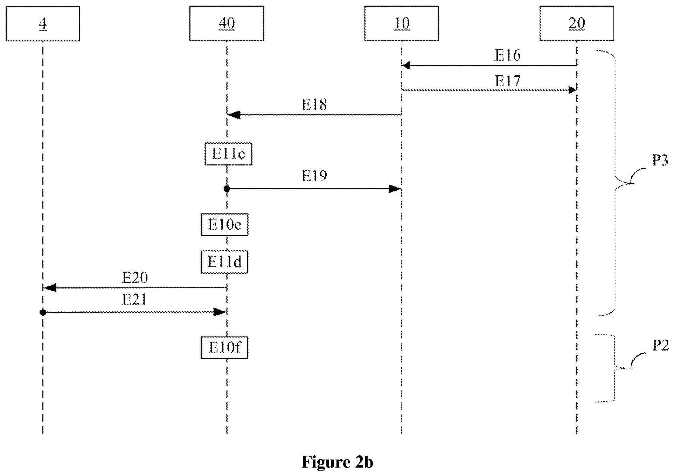

La phase P1 comprend les étapes E1 à E9. Lors d'une étape E1, le terminal 4 demande à être rattaché au réseau à l'entité de gestion de mobilité 40. Le terminal 4 envoie ensuite, lors d'une étape E2, une requête de connectivité PDN (pour « Packet Data Network ») à l'entité de gestion de mobilité 40. Cette requête vise à établir une connexion avec un réseau de communication par paquets (non représenté sur la figure 2).

Lors d'une étape E3, l'entité de gestion de mobilité 40 crée un contexte d'abonné pour le terminal 4. Ce contexte d'abonné est utilisé par l'entité de gestion de mobilité 40 afin de mémoriser diverses informations relatives au terminal 4 pendant la session de communication qui sera ultérieurement établie. Un contexte d'abonné est associé par terminal. Le terminal 4 est par exemple identifié par son identifiant IMSI (pour « International Mobile Subscriber Identity »).

Lors d'une étape E4, l'entité de gestion de mobilité 40 relaie la requête de connectivité PDN du terminal 4, en transmettant à une passerelle d'interconnexion P-GW 10, une requête de création d'une session de communication. La session de communication est plus précisément une session dite « IP CAN » (pour « Internet Protocol Connectivity Access Network ») telle que définie par le groupe de normalisation 3GPP. Cette session représente une association entre un terminal identifié par une adresse IPv4 (pour « Internet Protocol version 4 » en anglais) ou son préfixe IPv6 (pour « Internet Protocol version 6 » en anglais) et un réseau de communication par paquets identifié par un identifiant APN (pour « Access Point Name » en anglais).

Lors d'une étape E5, la passerelle d'interconnexion P-GW 10 envoie à une entité de contrôle PCRF 20 un message CCR-I (pour « Crédit Control Request - Initial ») afin d'obtenir des règles de contrôle PCC à appliquer.

Lors d'une étape E6, l'entité de contrôle PCRF 20 répond à la passerelle d'interconnexion P-GW 10 par l'envoi d'un message de réponse CCA-I (pour « Crédit Control Answer - Initial ») comprenant les règles de contrôle PCC. Ces règles de contrôle comprennent en particulier une pluralité d'identifiants de zone de signalisation de présence auxquels sont associés des niveaux de priorité. Ces identifiants indiquent à la passerelle d'interconnexion P-GW 10 que la signalisation de présence doit être activée, ou autrement dit que l'entité de contrôle PCRF 20 souhaite être notifiée lorsque le terminal entre dans, ou sort d'une des zones de signalisation de présence associées à l'abonné. A titre d'exemple cette pluralité est une liste L0 de zones de signalisation de présence d'identifiants PRA1, PRA2, PRA3 et PRA4 auxquels sont associés des niveaux de priorité p0, p1 et p2. La liste L0 a par exemple la forme suivante : {(PRA1, p0) ; (PRA2, p1) ; (PRA3, p2) ; (PRA4 ; p2)}, dans laquelle le niveau de priorité le plus important est p0, suivi par ordre de priorité décroissant du niveau de priorité p1, puis du niveau de priorité p2. La zone d'identifiant PRA1 est ainsi prioritaire sur la zone d'identifiant PRA2 qui elle-même est prioritaire sur les deux zones d'identifiant PRA3 et PRA4. Ces deux dernières zones bénéficient en revanche d'un même niveau de priorité.

Lors d'une étape E8, la passerelle d'interconnexion P-GW 10 envoie une réponse à l'entité de gestion de mobilité 40 pour lui indiquer que la session de communication IP CAN est établie. Cette réponse comprend la liste L0 des zones de signalisation de présence associées au terminal 4.

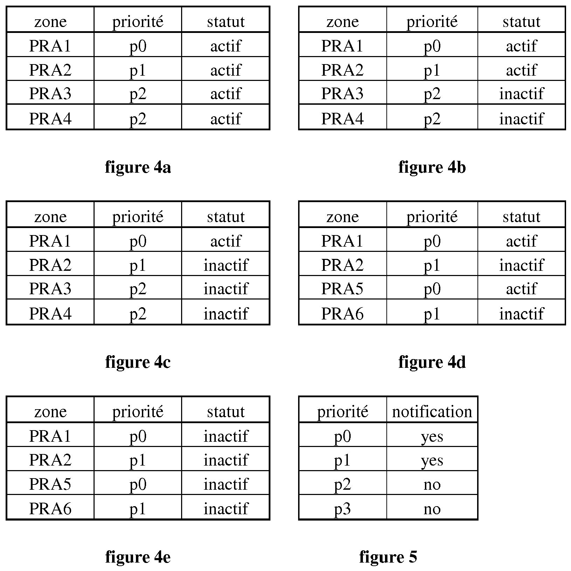

Lors d'une étape E9, l'entité de gestion de mobilité 40 mémorise la liste L0 dans le contexte d'abonné créé pour le terminal 4 à l'étape E3, puis souscrit au mécanisme de signalisation de présence décrit dans le document de spécifications du 3GPP « TS 23.203 », version 13.2, pour chaque zone de signalisation de présence de la liste L0. Le contexte d'abonnée pour le terminal 4 comprend alors la liste L0 de zones de signalisation de présence et des niveaux de priorité qui leur sont associés, ainsi qu'un statut actif ou inactif indiquant pour chacune de ces zones si le mécanisme de signalisation de présence est actif ou suspendu pour la zone considérée. Ce statut est initialement renseigné avec la valeur « actif », indiquant ainsi que le mécanisme de signalisation est activé pour l'ensemble des zones de signalisation. Le contexte d'abonné mémorise à titre d'exemple ces informations sous la forme d'une table T0 représentée en figure 4a.

Une fois la session de communication établie, l'entité de gestion de mobilité 40 vérifie à intervalle régulier lors d'étapes E10a-d si sa charge processeur est supérieure à un seuil prédéfini de charge critique. Afin de ne pas alourdir la figure 2 seules quelques-unes de ces itérations ont été représentées. Il n'existe cependant aucune limitation quant au nombre de vérification mise en oeuvre par l'entité de gestion de mobilité 40. On suppose pour le présent mode de réalisation que la charge critique est prédéfinie à 90% d'occupation des ressources de l'entité de gestion de mobilité 40. Lors de l'étape E10a, l'entité de gestion de mobilité 40 mesure un taux de charge de 70% inférieure au taux de charge critique. L'entité de gestion de mobilité 40 est par conséquent dans une phase de charge normale P2, et aucune suspension du mécanisme de signalisation de présence n'est mise en oeuvre.

Lors de l'étape E10b, l'entité de gestion de mobilité 40 mesure à nouveau sa charge processeur. Cette dernière est alors de 95%, soit un taux supérieur au taux de charge critique. L'entité de gestion de mobilité 40 est alors dans une phase P3 de surcharge.

Le taux de charge étant supérieur au taux de charge critique, l'entité de gestion de mobilité 40 suspend, lors d'une étape E11a, le mécanisme de signalisation de présence pour les zones de signalisation de présence dont le niveau de priorité est inférieur ou égal, selon un ordre de priorité décroissante, à un niveau de priorité de transition. Le niveau de priorité de transition est à titre d'exemple initialement configuré avec le niveau de priorité p2. Pour cela, l'entité de gestion de mobilité 40 met à jour le contexte d'abonné du terminal 4. Plus précisément, l'entité de gestion de mobilité 40 valorise les statuts associés aux zones de signalisation de présence dont la priorité est inférieure ou égale au niveau de priorité p2 avec la valeur « inactif », indiquant que le mécanisme de signalisation est suspendu pour ces zones. Dans l'exemple considéré, seules les zones d'identifiants PRA3 et PRA4 ont un niveau de priorité inférieur ou égal au niveau de priorité p2. Le contexte d'abonné représenté en figure 4a est alors mis à jour conformément à la figure 4b dans laquelle les zones d'identifiants PRA3 et PRA4 se voient affecter un statut « inactif ». Ces dernières zones ne font ainsi plus l'objet d'une surveillance par le mécanisme de signalisation de présence.

Lors d'une étape E12a, l'entité de gestion de mobilité 40 vérifie à l'aide d'une table de correspondance mémorisant pour chaque niveau de priorité si l'envoi d'une notification auprès de l'entité de contrôle PCRF 20 est souhaité en cas de suspension du mécanisme de signalisation de présence. Une telle table de correspondance T1 est donnée à titre d'exemple en relation avec la figure 5. La table T1 indique que l'envoi d'une notification à l'entité de contrôle PCRF 20 est souhaité pour les niveaux de priorité p0 et p1, mais qu'il n'est en revanche pas nécessaire pour les niveaux de priorité p2 et p3. L'entité de gestion de mobilité 40 combine les informations données par la table de correspondance avec le contexte d'abonné du terminal 4 afin de déterminer pour quelles zones de signalisation de présence il est nécessaire de notifier l'entité de contrôle PCRF 20. Le contexte d'abonné comprend deux zones avec un statut inactif : les zones d'identifiants PRA3 et PRA4. Le contexte d'abonné indique en outre que les zones d'identifiants PRA3 et PRA4 ont un niveau de priorité p2. La table de correspondance T1 indique pour le niveau de priorité p2 qu'aucune notification auprès de l'entité de contrôle PCRF 20 n'est nécessaire, et l'entité de gestion de mobilité 40 ne lui envoie donc aucune notification.

Lors de l'étape E10c, l'entité de gestion de mobilité 40 vérifie son taux de charge. Le taux de charge est à titre d'exemple de 92%. Bien que la suspension du mécanisme de signalisation pour les zones d'identifiant PRA3 et PRA4 ait permis de réduire la charge de l'entité de gestion de mobilité 40, cette dernière demeure encore supérieure à la charge critique. L'entité de gestion de mobilité 40 est donc toujours dans une phase de surcharge P3. L'entité de gestion de mobilité 40 incrémente alors le niveau de priorité de transition en lui affectant le niveau de priorité p1 qui lui est immédiatement supérieur, puis réitère la suspension du mécanisme de signalisation de présence lors d'une étape E11b similaire à l'étape E11a. A l'issue de l'étape E11a, les zones de signalisation de présence du contexte d'abonné du terminal 4 dont le niveau de priorité est inférieur ou égal au niveau de priorité de transition p1 voient leur statut mis à jour avec la valeur « inactif ». Le mécanisme de signalisation de présence est ainsi suspendu pour l'ensemble de ces zones. Dans l'exemple décrit, il s'agit des zones d'identifiants PRA2, PRA3 et PRA4. La figure 4c illustre le contenu du contexte d'abonné à la fin de cette étape E11b.

Lors d'une étape E12b, similaire à l'étape E12a, l'entité de gestion de mobilité 40 vérifie à l'aide de la table de correspondance T1 si l'envoi d'une notification auprès de l'entité de contrôle PCRF 20 est nécessaire suite à la mise à jour du contexte d'abonné du terminal 4. La table T1 indique que l'envoi d'une notification à l'entité de contrôle PCRF 20 est souhaité pour les niveaux de priorité p0 et p1. Le contexte d'abonné comprend à ce stade trois zones avec un statut inactif : les zones d'identifiants PRA2, PRA3 et PRA4. Le contexte d'abonné indique en outre que la zone d'identifiant PRA2 a un niveau de priorité p1, et que les zones d'identifiants PRA3 et PRA4 ont un niveau de priorité p2. L'entité de gestion de mobilité 40 envoie donc une notification à destination de l'entité de contrôle PCRF 20 pour notifier cette dernière que le mécanisme de signalisation de présence a été suspendu pour la zone de signalisation d'identifiant PRA2. Plus précisément, l'entité de gestion de mobilité 40 envoie à la passerelle d'interconnexion P-GW 10 un message de mise à jour de la session de communication comprenant une information indiquant que le mécanisme de signalisation de présence est suspendu pour la zone d'identifiant PRA2. La passerelle d'interconnexion P-GW 10 traduit et relaie ensuite ce message lors d'une étape E13 auprès de l'entité de contrôle PCRF 20. Ce dernier message est par exemple un message CCR de mise à jour.

Lors d'une étape E14, l'entité de contrôle PCRF 20 acquitte le message CCR par l'envoi d'une réponse CCA à la passerelle d'interconnexion P-GW 10. Lors d'une étape E15, ce dernier message d'acquittement est ensuite relayé par la passerelle d'interconnexion P-GW 10 auprès de l'entité de gestion de mobilité 40.

Lors de l'étape E10d, l'entité de gestion de mobilité mesure une nouvelle fois son taux de charge. Ce dernier est à titre d'exemple de 80%. La suspension du mécanisme de signalisation de présence pour les zones d'identifiants PRA2, PRA3 et PRA4 a ainsi permis de revenir à un taux de charge inférieur au taux de charge critique. L'entité de gestion de mobilité est alors de nouveau dans une phase P2 de charge normale.

Il est également souligné que bien non représenté le mécanisme de signalisation de présence est de nouveau activé pour les zones de signalisation de présence ayant un statut inactif dans le contexte d'abonné en fonction des niveaux de priorité selon un ordre croissant de ces derniers. Le mécanisme de signalisation est plus précisément activé de nouveau pour les zones de signalisation de présence liées à un niveau de priorité, à chaque fois que la charge de l'entité de gestion de mobilité 40 atteint un seuil de réactivation pour ce niveau de priorité.

Dans le mode de réalisation décrit, la vérification de la charge de l'entité de gestion de mobilité lors des étapes E10a-d utilise un taux de charge processeur. Il n'existe cependant aucune limitation quant au type d'indicateur utilisé pour réaliser cette vérification. Dans un autre mode de réalisation, le procédé utilise par exemple une mesure du nombre de requêtes reçues par l'entité de gestion de mobilité 40, un taux d'occupation de ses files d'attente, ou plus généralement tout indicateur permettant de suivre une activité de l'entité de gestion de mobilité 40.

Dans un autre mode de réalisation, la table de correspondance entre les niveaux de priorité et le besoin de notifier l'entité de contrôle PCRF 20 est fournie par cette dernière entité. Ce mode de réalisation permet notamment de prendre en compte des priorités associées à des zones de signalisation de présence pour un terminal.

Le présent mode de réalisation a été décrit pour un seul terminal, il n'existe cependant pas de limitation quant au nombre de terminaux gérés par l'entité de gestion de mobilité. Dans un autre mode de réalisation, pour un niveau de priorité donné, l'entité de gestion de mobilité suspend le mécanisme de signalisation de présence simultanément pour tous les terminaux qu'elle gère.

En outre, en cas de mobilité du terminal 4 d'une zone géographique couverte par l'entité de gestion de mobilité 40 vers une zone géographique couverte par une autre entité de gestion de mobilité, le procédé comprend l'envoi du contexte d'abonné avec les niveaux de priorité des zones de signalisation de présence associés au terminal 4, à cette autre entité de gestion de mobilité.

Le présent mode de réalisation a été décrit avec une mise en oeuvre dans un réseau LTE / EPS. Le procédé peut cependant facilement être adapté à d'autres technologies réseau. Dans un réseau GPRS (pour « General Packet Radio Service »), EDGE (pour « Enhanced Data Rates for GSM Evolution ») ou encore UMTS (pour « Universal Mobile Telecommunications System »), le procédé sera par exemple mis en oeuvre par une entité SGSN.

La **figure 2b** représente des étapes d'un procédé de gestion du trafic réseau relatif à un mécanisme de signalisation de présence d'un terminal 4 dans un réseau selon un deuxième mode particulier de réalisation.

Les entités du réseau mises en oeuvre dans ce deuxième mode de réalisation sont les mêmes que celles décrites en relation avec la figure 2a. Ce deuxième mode de réalisation décrit plus particulièrement les étapes du procédé de gestion mise en oeuvre lors d'une mise à jour des niveaux de priorité ou de la liste des zones de signalisation de présence associées à un abonné. Il décrit également le cas particulier où le mécanisme de signalisation de présence est suspendu pour toutes les zones de signalisation de présence associées à un abonné.

On suppose que l'entité de gestion de mobilité est dans une phase de surcharge P3. On suppose en outre qu'une session de communication est établie entre le terminal 4 et un réseau de communication par paquets, le contexte d'abonné pour le terminal 4 correspondant au contexte d'abonné de la figure 4c. L'entité de gestion de mobilité 40 dispose en outre de la même table de correspondance T1 décrite précédemment en relation avec la figure 5. Le taux de charge critique et le niveau de priorité de transition sont ceux correspondant à la configuration de l'entité de gestion de mobilité 40 à la fin du processus décrit en relation avec la figure 2a, soit respectivement 90% et p1.

Lors d'une étape E16, l'entité de contrôle PCRF 20 transmet à la passerelle d'interconnexion P-GW 10 un message « Re-autorisation Request » comprenant une nouvelle liste L1 d'identifiants de zone de signalisation de présence PRA1, PRA2, PRA5 et PRA6 auxquels sont associés des niveaux de priorité p0 et p1. La liste L1 est à titre d'exemple la suivante : {(PRA1, p0) ; (PRA2, p1) ; (PRA5, p0) ; (PRA6 ; p1)}, où les zones d'identifiants PRA1 et PRA5 ont un niveau de priorité p0, et les zones de priorité d'identifiants PRA2 et PRA6 ont un niveau de priorité p1.

Lors d'une étape E17, la passerelle d'interconnexion P-GW 10 acquitte le message reçu à l'étape E16.

Lors d'une étape E18, la passerelle d'interconnexion P-GW 10 envoie un message de mise à jour de la session de communication à destination de l'entité de gestion de mobilité 40. Ce message comprend la liste L1.

Lors d'une étape E11c, l'entité de gestion de mobilité 40 met à jour le contexte d'abonné du terminal 4. Pour cela l'entité de gestion de mobilité 40 affecte un statut « inactif » à l'ensemble des nouvelles zones de signalisation de présence du contexte d'abonné du terminal 4 dont le niveau de priorité est inférieur ou égal au niveau de priorité de transition p1, et un statut « actif » pour les zones de signalisation de présence du contexte d'abonné du terminal 4 dont le niveau de priorité est supérieur au niveau de priorité de transition p1. Le mécanisme de signalisation de présence est alors suspendu pour les zones d'identifiants PRA2 et PRA6. La figure 4d illustre le contenu du contexte d'abonné à la fin de l'étape E11c.

Lors d'une étape E19, l'entité de gestion de mobilité 40 acquitte le message de mise à jour de la session de communication auprès de la passerelle d'interconnexion P-GW 10. Le message d'acquittement envoyé par l'entité de gestion de mobilité 40 comprend en outre une notification à destination de l'entité de contrôle PCRF 20 pour notifier cette dernière que le mécanisme de signalisation de présence a été suspendu pour la zone de signalisation d'identifiant PRA6. Plus précisément, l'entité de gestion de mobilité 40 envoie à la passerelle d'interconnexion P-GW 10 un message de mise à jour de la session de communication comprenant une information indiquant que le mécanisme de signalisation de présence est suspendu pour la zone d'identifiant PRA6. La passerelle d'interconnexion P-GW 10 traduit et relaie ensuite ce message lors d'une étape auprès de l'entité de contrôle PCRF 20. Aucune notification n'est en revanche envoyée pour les zones de signalisation de présence dont le statut dans le contexte d'abonné du terminal 4 est un statut inactif tant avant qu'après la mise à jour du contexte à l'étape E11c (cas de la zone de signalisation d'identifiant PRA2).

Lors d'une étape E10e, l'entité de gestion de mobilité 40 vérifie son taux de charge. Le taux de charge est à titre d'exemple de 91%. L'entité de gestion de mobilité 40 est donc toujours dans une phase de surcharge P3. L'entité de gestion de mobilité 40 incrémente alors le niveau de priorité de transition en lui affectant le niveau de priorité p0 immédiatement supérieur au niveau de priorité p1, puis réitère la suspension du mécanisme de signalisation de présence lors d'une étape E11d similaire à l'étape Elle. A l'issue de l'étape E11d, les zones de signalisation de présence du contexte d'abonné du terminal 4 dont le niveau de priorité est inférieur ou égal au niveau de priorité de transition p0 voient leur statut mis à jour avec la valeur « inactif ». Le mécanisme de signalisation de présence est ainsi suspendu pour l'ensemble des zones associées au terminal 4. La figure 4e représente le contenu du contexte d'abonné à la fin de l'étape E11d.

Les zones de signalisation pour lesquelles le mécanisme de signalisation de présence a été suspendu ayant soit un niveau de priorité p0 soit un niveau de priorité p1, une nouvelle notification indiquant que le mécanisme de signalisation de présence a été suspendu pour les zones d'identifiants PRA1 et PRA5 est envoyée à l'entité de contrôle PCRF 20 conformément à la table de correspondance T1 (non représenté).

Le mécanisme de signalisation étant suspendu pour toutes les zones de signalisation de présence associées au terminal 4, l'entité de gestion de mobilité 40 envoie, lors d'une étape E20, à destination de la station de base à laquelle le terminal est attaché, une commande de résiliation de souscription de la station de base au mécanisme de signalisation de présence.

Lors d'une étape E21, la station de base acquitte la commande de résiliation de souscription reçue à l'étape E20 auprès de l'entité de gestion de mobilité 40.

Lors d'une étape E10f, l'entité de gestion de mobilité 40 vérifie son taux de charge. Ce dernier est à titre d'exemple de 75%. La charge de l'entité de gestion de mobilité 40 est redescendue en dessous de la charge critique, et l'entité de gestion de mobilité 40 est de nouveau dans une phase de charge normale P2. La résiliation de la souscription au mécanisme de signalisation par la station de base a ainsi permis une réduction du trafic émis vers l'entité de gestion de mobilité 40. Cette réduction du trafic entrant vient s'ajouter aux mesures déjà prises localement par l'entité de gestion de mobilité 40 et permet à cette dernière de retrouver un taux de charge normal.

La **figure 3** représente une entité de gestion de mobilité 40 selon un mode particulier de réalisation. L'entité de gestion de mobilité 40 est apte à mettre en oeuvre un mécanisme de signalisation de présence d'un terminal dans une pluralité de zones de signalisation de présence et comprend :
- un module de réception 400 agencé pour recevoir, depuis une entité de contrôle, pour chaque zone de signalisation de présence de ladite pluralité, un identifiant de zone et un niveau de priorité pour cette zone ;
- un module de mémorisation 410 agencé pour mémoriser dans un contexte d'abonné relatif à un abonné du terminal, les identifiants et niveaux de priorité reçus en association avec un identifiant du terminal ;
- un module de vérification 420 agencé pour vérifier que la charge de l'entité de gestion de mobilité 40 est supérieure à un seuil prédéfini de charge critique ;
- un module de suspension 430, activé lorsque la charge de l'entité de gestion de mobilité 40 est vérifiée supérieure à un seuil prédéfini de charge critique, et agencé pour suspendre le mécanisme de signalisation de présence pour les zones, dites zones non surveillées, de signalisation de présence de la pluralité dont le niveau de priorité est inférieur à un niveau de priorité de transition.

Dans un autre mode de réalisation, l'entité de gestion de mobilité 40 comprend en outre un module d'envoi agencé pour, lorsque le mécanisme de signalisation de présence est suspendu pour toutes les zones de signalisation de présence associées au terminal, envoyer à destination de la station de base à laquelle le terminal est attaché, une commande de résiliation de souscription de la station de base au mécanisme de signalisation de présence pour le terminal.

Dans un autre mode de réalisation, l'entité de gestion de mobilité 40 comprend un module de notification agencé pour notifier une entité de contrôle en cas de suspension du mécanisme de signalisation pour une des zones de signalisation de présence associée au terminal.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 400, 410, 420, et 430 sont agencés pour mettre en oeuvre le procédé de gestion du trafic réseau relatif à un mécanisme de signalisation de présence d'un terminal précédemment décrit. Il s'agit de préférence de modules logiciels comprenant des instructions logicielles pour faire exécuter les étapes du procédé de gestion du trafic réseau relatif à un mécanisme de signalisation de présence d'un terminal précédemment décrit, mises en oeuvre par une entité de gestion de mobilité 40.

L'invention concerne donc aussi :
- un programme pour une entité de gestion de mobilité, comprenant des instructions de code de programme destinées à commander l'exécution des étapes du procédé de gestion du trafic réseau relatif à un mécanisme de signalisation de présence d'un terminal précédemment décrit, lorsque ledit programme est exécuté par ladite entité de gestion de mobilité ;
- un support d'enregistrement lisible par une entité de gestion de mobilité sur laquelle est enregistré le programme pour une entité de gestion de mobilité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de gestion, dans un réseau de communication, du trafic réseau relatif à un mécanisme de signalisation de présence d'un terminal (4) dans une pluralité de zones de signalisation de présence, comprenant les étapes suivantes mises en oeuvre par une entité de gestion de mobilité (40) :
- réception (E8), pour chaque zone de signalisation de présence de ladite pluralité, d'un identifiant de zone et d'un niveau de priorité pour ladite zone ;
- mémorisation (E9) dans un contexte d'abonné relatif à un abonné dudit terminal, desdits identifiants et niveaux de priorité reçus en association avec un identifiant dudit terminal ;
et lorsque la charge de ladite entité de gestion de mobilité est supérieure à un seuil prédéfini de charge critique :
- suspension (Ella-b) dudit mécanisme de signalisation de présence pour les zones, dites zones non surveillées, de signalisation de présence de ladite pluralité dont le niveau de priorité est inférieur à un niveau de priorité de transition.

2. Procédé selon la revendication 1, dans lequel ladite étape de suspension est réitérée jusqu'à ce que la charge de ladite entité de gestion de mobilité soit inférieure audit seuil de charge critique, ledit niveau de priorité de transition étant incrémenté à chaque nouvelle itération au niveau de priorité qui lui est immédiatement supérieur.

3. Procédé selon la revendication 1, comprenant en outre, lorsque ledit mécanisme de signalisation de présence est suspendu pour toutes les zones de signalisation de présence associées audit terminal, un envoi (E20) à destination de la station de base à laquelle ledit terminal est attaché, d'une commande de résiliation de souscription de ladite station de base audit mécanisme de signalisation de présence pour ledit terminal.

4. Procédé selon la revendication 1, dans lequel un indicateur de notification est associé à chaque niveau de priorité, ledit indicateur indiquant si l'envoi d'une notification auprès d'une entité de contrôle est souhaité pour ledit niveau de priorité en cas de suspension du mécanisme de signalisation, comprenant un envoi (E12b) à ladite entité de contrôle d'une notification de suspension dudit mécanisme de signalisation de présence pour lesdites zones non surveillées ayant un niveau de priorité pour lequel ledit indicateur indique que ledit envoi est souhaité.

5. Procédé selon la revendication 4, dans lequel ledit indicateur de notification et lesdits niveaux de priorité sont fournis à ladite entité de gestion de mobilité par ladite entité de contrôle.

6. Procédé selon la revendication 1, dans lequel ledit contexte d'abonné comprend pour chaque identifiant de zone de signalisation de présence de ladite pluralité mémorisé un statut actif ou suspendu indiquant si le mécanisme de signalisation de présence est actif ou suspendu pour ladite zone de signalisation de présence, ledit procédé comprenant en outre une étape de mise à jour (Elle) desdits statuts en cas de modification des zones de signalisation de présence associées audit terminal, les statuts associés aux nouvelles zones de signalisation de présence étant actifs pour lesdites nouvelles zones de signalisation de présence dont le niveau de priorité est supérieur audit niveau de priorité de transition, et inactifs pour lesdites nouvelles zones de signalisation de présence dont le niveau de priorité est inférieur audit niveau de priorité de transition.

7. Entité de gestion de mobilité (40), dans un réseau de communication, apte à mettre en oeuvre un mécanisme de signalisation de présence d'un terminal dans une pluralité de zones de signalisation de présence, comprenant :
- un module de réception (400) agencé pour recevoir, depuis une entité de contrôle, pour chaque zone de signalisation de présence de ladite pluralité, un identifiant de zone et un niveau de priorité pour ladite zone ;
- un module de mémorisation (410) agencé pour mémoriser dans un contexte d'abonné relatif à un abonné dudit terminal, lesdits identifiants et niveaux de priorité reçus en association avec un identifiant dudit terminal ;
- un module de vérification (420) agencé pour vérifier que la charge de ladite entité de gestion de mobilité est supérieure à un seuil prédéfini de charge critique ;
- un module de suspension (430), activé lorsque la charge de ladite entité de gestion de mobilité est vérifiée supérieure à un seuil prédéfini de charge critique, et agencé pour suspendre ledit mécanisme de signalisation de présence pour les zones, dites zones non surveillées, de signalisation de présence de ladite pluralité dont le niveau de priorité est inférieur à un niveau de priorité de transition.

8. Entité de contrôle (20) dans un réseau de communication, apte à adapter et contrôler l'usage des ressources réseaux en fonction de services requis par chaque abonné et de son profil d'abonné et apte à déterminer qu'une signalisation de présence d'un terminal dans une pluralité de zones de signalisation de présence est requise pour un profil d'abonné dudit réseau, ladite entité de contrôle comprenant un module d'envoi agencé pour envoyer à une entité de gestion de mobilité (40) pour chaque zone de signalisation de présence de ladite pluralité, un identifiant de zone et un niveau de priorité pour ladite zone.

9. Système (3) de gestion du trafic réseau relatif à un mécanisme de signalisation de présence d'un terminal dans une pluralité de zones de signalisation de présence d'un réseau de communication, comprenant :
- au moins une entité de gestion de mobilité (40) selon la revendication 7 ; et
- au moins une entité de contrôle (20) selon la revendication 8.

10. Programme pour une entité de gestion de mobilité, comprenant des instructions de code de programme destinées à commander l'exécution des étapes du procédé selon l'une des revendications 1 à 6, lorsque ledit programme est exécuté par ladite entité de gestion de mobilité.

11. Support d'enregistrement lisible par une entité de gestion de mobilité sur laquelle est enregistré le programme selon la revendication 10.

## Patentansprüche

1. Verfahren zur Verwaltung, in einem Kommunikationsnetz, des Netzwerkverkehrs im Zusammenhang mit einem Mechanismus zur Signalisierung des Vorhandenseins eines Endgerätes (4) in einer Vielzahl von Bereichen der Signalisierung des Vorhandenseins, welches die folgenden Schritte umfasst, die von einer Mobilitätsverwaltungseinheit (40) durchgeführt werden:
- Empfang (E8), für jeden Bereich der Signalisierung des Vorhandenseins der Vielzahl, einer Bereichskennung und einer Prioritätsstufe für den Bereich;
- Speicherung (E9), in einem Teilnehmerkontext, der sich auf einen dem Endgerät zugeordneten Teilnehmer bezieht, der empfangenen Kennungen und Prioritätsstufen in Verbindung mit einer Kennung des Endgerätes;
und wenn die Last der Mobilitätsverwaltungseinheit größer als ein vordefinierter Schwellenwert der kritischen Last ist:
- Aussetzung (Ella-b) des Mechanismus zur Signalisierung des Vorhandenseins für die "nicht überwachte Bereiche" genannten Bereiche der Signalisierung des Vorhandenseins der Vielzahl, deren Prioritätsstufe niedriger als eine Übergangs-Prioritätsstufe ist.

2. Verfahren nach Anspruch 1, wobei der Schritt der Aussetzung reiteriert wird, bis die Last der Mobilitätsverwaltungseinheit kleiner als der Schwellenwert der kritischen Last ist, wobei die Übergangs-Prioritätsstufe bei jeder neuen Iteration auf die Prioritätsstufe inkrementiert wird, welche die unmittelbar nächsthöhere ist.

3. Verfahren nach Anspruch 1, welches außerdem, wenn der Mechanismus zur Signalisierung des Vorhandenseins für alle Bereiche der Signalisierung des Vorhandenseins, die dem Endgerät zugeordnet sind, ausgesetzt ist, ein Senden (E20), an die Basisstation, mit der das Endgerät verbunden ist, eines Befehls zur Kündigung der Anmeldung der Basisstation bei dem Mechanismus zur Signalisierung des Vorhandenseins für das Endgerät umfasst.

4. Verfahren nach Anspruch 1, wobei jeder Prioritätsstufe ein Benachrichtigungsindikator zugeordnet ist, wobei dieser Indikator anzeigt, ob das Senden einer Benachrichtigung an eine Steuereinheit für diese Prioritätsstufe im Falle einer Aussetzung des Mechanismus zur Signalisierung erwünscht ist, welches ein Senden (E12b), an die Steuereinheit, einer Benachrichtigung über die Aussetzung des Mechanismus zur Signalisierung des Vorhandenseins für die nicht überwachten Bereiche umfasst, die eine Prioritätsstufe aufweisen, für welche der Indikator anzeigt, dass das Senden erwünscht ist.

5. Verfahren nach Anspruch 4, wobei der Benachrichtigungsindikator und die Prioritätsstufen von der Steuereinheit an die Mobilitätsverwaltungseinheit übermittelt werden.

6. Verfahren nach Anspruch 1, wobei der Teilnehmerkontext für jede gespeicherte Kennung eines Bereichs der Signalisierung des Vorhandenseins der Vielzahl einen aktiven oder ausgesetzten Status umfasst, der angibt, ob der Mechanismus zur Signalisierung des Vorhandenseins für den betreffenden Bereich der Signalisierung des Vorhandenseins aktiv oder ausgesetzt ist, wobei das Verfahren außerdem einen Schritt der Aktualisierung (E11c) dieser Status im Falle einer Änderung der Bereiche der Signalisierung des Vorhandenseins, die dem Endgerät zugeordnet sind, umfasst, wobei die Status, die den neuen Bereichen der Signalisierung des Vorhandenseins zugeordnet sind, für die neuen Bereiche der Signalisierung des Vorhandenseins, deren Prioritätsstufe höher als die Übergangs-Prioritätsstufe ist, aktiv sind und für die neuen Bereiche der Signalisierung des Vorhandenseins, deren Prioritätsstufe niedriger als die Übergangs-Prioritätsstufe ist, inaktiv sind.

7. Mobilitätsverwaltungseinheit (40) in einem Kommunikationsnetz, welche geeignet ist, einen Mechanismus zur Signalisierung des Vorhandenseins eines Endgerätes in einer Vielzahl von Bereichen der Signalisierung des Vorhandenseins zu realisieren, und umfasst:
- ein Empfangsmodul (400), das dafür ausgelegt ist, von einer Steuereinheit für jeden Bereich der Signalisierung des Vorhandenseins der Vielzahl eine Bereichskennung und eine Prioritätsstufe für den Bereich zu empfangen;
- ein Speichermodul (410), das dafür ausgelegt ist, in einem Teilnehmerkontext, der sich auf einen dem Endgerät zugeordneten Teilnehmer bezieht, die empfangenen Kennungen und Prioritätsstufen in Verbindung mit einer Kennung des Endgerätes zu speichern;
- ein Überprüfungsmodul (420), das dafür ausgelegt ist zu überprüfen, ob die Last der Mobilitätsverwaltungseinheit größer als ein vordefinierter Schwellenwert der kritischen Last ist;
- ein Aussetzungsmodul (430), das aktiviert wird, wenn die Last der Mobilitätsverwaltungseinheit gemäß der Überprüfung größer als ein vordefinierter Schwellenwert der kritischen Last ist, und dafür ausgelegt ist, den Mechanismus zur Signalisierung des Vorhandenseins für die "nicht überwachte Bereiche" genannten Bereiche der Signalisierung des Vorhandenseins der Vielzahl, deren Prioritätsstufe niedriger als eine Übergangs-Prioritätsstufe ist, auszusetzen.

8. Steuereinheit (20) in einem Kommunikationsnetz, welche geeignet ist, die Verwendung der Netzressourcen in Abhängigkeit von Diensten, die durch jeden Teilnehmer angefordert werden, und von seinem Teilnehmerprofil anzupassen und zu steuern, und geeignet ist zu bestimmen, ob eine Signalisierung des Vorhandenseins eines Endgerätes in einer Vielzahl von Bereichen der Signalisierung des Vorhandenseins für ein Profil eines Teilnehmers des Netzes erforderlich ist, wobei die Steuereinheit ein Sendemodul umfasst, das dafür ausgelegt ist, an eine Mobilitätsverwaltungseinheit (40) für jeden Bereich der Signalisierung des Vorhandenseins der Vielzahl eine Bereichskennung und eine Prioritätsstufe für den Bereich zu senden.

9. System (3) zur Verwaltung des Netzwerkverkehrs im Zusammenhang mit einem Mechanismus zur Signalisierung des Vorhandenseins eines Endgerätes in einer Vielzahl von Bereichen der Signalisierung des Vorhandenseins eines Kommunikationsnetzes, welches umfasst:
- wenigstens eine Mobilitätsverwaltungseinheit (40) nach Anspruch 7; und
- wenigstens eine Steuereinheit (20) nach Anspruch 8.

10. Programm für eine Mobilitätsverwaltungseinheit, welches Programmcodeanweisungen umfasst, die dazu bestimmt sind, die Ausführung der Schritte des Verfahrens nach einem der Ansprüche 1 bis 6 zu steuern, wenn das Programm von der Mobilitätsverwaltungseinheit ausgeführt wird.

11. Aufzeichnungsmedium, das von einer Mobilitätsverwaltungseinheit lesbar ist und auf welchem das Programm nach Anspruch 10 aufgezeichnet ist.

## Claims

1. Method for managing, in a communication network, network traffic related to a mechanism for reporting the presence of a terminal (4) in a plurality of presence reporting areas, comprising the following steps implemented by a mobility management entity (40):
- receiving (E8), for each presence reporting area of said plurality, an area identifier and a priority level for said area;
- storing (E9), in a subscriber context related to a subscriber of said terminal, said identifiers and priority levels received in association with an identifier of said terminal;
and, when the load on said mobility management entity is higher than a predefined critical load threshold:
- suspending (E11a-b) said presence reporting mechanism for the presence reporting areas, referred to as non-monitored areas, of said plurality whose priority level is lower than a transitional priority level.

2. Method according to Claim 1, wherein the suspension step is reiterated until the load on said mobility management entity is below said critical load threshold, said transitional priority level being incremented on each new iteration to the priority level lying immediately above it.

3. Method according to Claim 1, further comprising, when said presence reporting mechanism is suspended for all the presence reporting areas associated with said terminal, sending (E20) to the base station to which said terminal is attached a command to cancel the subscription of said base station to said presence reporting mechanism for said terminal.

4. Method according to Claim 1, wherein a notification indicator is associated with each priority level, said indicator indicating whether it is desired to send a notification to a control entity for said priority level if the reporting mechanism is suspended, comprising sending (E12b) to said control entity a notification of suspension of said presence reporting mechanism for said non-monitored areas having a priority level for which said indicator indicates that said sending is desired.

5. Method according to Claim 4, wherein said notification indicator and said priority levels are supplied to said mobility management entity by said control entity.

6. Method according to Claim 1, wherein said subscriber context comprises, for each presence reporting area identifier of said stored plurality, an active or suspended status, indicating whether the presence reporting mechanism is active or suspended for said presence reporting area, said method further comprising a step of updating (E11c) said statuses if the presence reporting areas associated with said terminal are modified, the statuses associated with the new presence reporting areas being active for said new presence reporting areas whose priority level is higher than said transitional priority level, and inactive for said new presence reporting areas whose priority level is lower than said transitional priority level.

7. Mobility management entity (40), in a communication network, capable of implementing a mechanism for reporting the presence of a terminal in a plurality of presence reporting areas, comprising:
- a receiving module (400) arranged to receive from a control entity, for each presence reporting area of said plurality, an area identifier and a priority level for said area;
- a storage module (410) arranged to store, in a subscriber context related to a subscriber of said terminal, said identifiers and priority levels received in association with an identifier of said terminal;
- a verification module (420) arranged to verify that the load on said mobility management entity is higher than a predefined critical load threshold;
- a suspension module (430), activated when the load on said mobility management entity is verified to be higher than a predefined critical load threshold, and arranged to suspend said presence reporting mechanism for the presence reporting areas, referred to as non-monitored areas, of said plurality whose priority level is lower than a transitional priority level.

8. Control entity (20), in a communication network, capable of adapting and controlling the use of network resources on the basis of services required by each subscriber and his subscriber profile and capable of determining that a reporting of the presence of a terminal in a plurality of presence reporting areas is required for a subscriber profile of said network, said control entity comprising a sending module arranged to send to a mobility management entity (40), for each presence reporting area of said plurality, an area identifier and a priority level for said area.

9. System (3) for managing the network traffic related to a mechanism for reporting the presence of a terminal in a plurality of presence reporting areas of a communication network, comprising:
- at least one mobility management entity (40) according to Claim 7; and
- at least one control entity (20) according to Claim 8.

10. Program for a mobility management entity, comprising program code instructions intended to command the execution of the steps of the method according to any of Claims 1 to 6, when said program is executed by said mobility management entity.

11. Recording medium, readable by a mobility management entity, on which the program according to Claim 10 is recorded.
